# EUROPEAN PATENT APPLICATION

(11) **EP 4 527 533 A1**
(43) Date of publication of application: **26.03.2025**
(21) Application number: 24197002.9
(22) Date of filing: 28.08.2024
(51) Int. Cl.: B23D 35/00, B23D 17/04, B23D 29/00

(54) **CUTTING DEVICE**

(30) Priority: 31.08.2023 JP 2023141756
(71) Applicant: MAX CO., LTD., Tokyo 103-8502 (JP)
(72) Inventor: YOSHIMURA, Kazunobu, Tokyo, 103-8502 (JP); SANO, Shoma, Tokyo, 103-8502 (JP)
(74) Representative: Samson & Partner Patentanwälte mbB

(57) **Abstract**

A cutting device (10) includes: a first cutting blade (111) in which a first opening (H1) and a second opening (H2) are formed; a first link (121) in which an opening is formed; a frame in which an opening is formed; at least one of a first shaft member (first pin P1) pivotably connecting the first cutting blade (111) to the first link (121) by being inserted through the first opening (H1) and the opening (LH1) of the first link (121), and a second shaft member (second pin P2) pivotably connecting the first cutting blade (111) to the frame (11) by being inserted through the second opening (H2) and the opening of the frame (11); and at least one of a first movement restriction member (first stopper ST1) configured to restrict the first shaft member (first pin P1) from moving in a direction of detaching from the first opening (H1), and a second movement restriction member (third stopper ST3) configured to restrict the second shaft member (pin P2) from moving in a direction of detaching from the second opening (H2).

## Description

### TECHNICAL FIELD

The present invention relates to a cutting device.

### BACKGROUND ART

In recent years, a cutting device capable of cutting metals such as reinforcing bars has become known.

Patent Literatures 1 and 2 disclose such a cutting device.
Patent Literature 1: JP2021-171580A
Patent Literature 2: JPH02-8651Y

In such a cutting device, a cutting blade is attached to a body with a bolt and a nut. Therefore, in order to replace an old cutting blade that is damaged due to wear or chipping with a new cutting blade, cumbersome work of loosening the nut to remove the worn cutting blade from the body, and then reattaching the new cutting blade to the body with the bolt and the nut is required.

Therefore, an object of the present invention is to provide a cutting device in which a cutting blade can be easily replaced.

### SUMMARY OF INVENTION

A cutting device includes: a first cutting blade in which a first opening and a second opening are formed; a first link in which an opening is formed; a frame in which an opening is formed; at least one of a first shaft member pivotably connecting the first cutting blade to the first link by being inserted through the first opening and the opening of the first link, and a second shaft member pivotably connecting the first cutting blade to the frame by being inserted through the second opening and the opening of the frame; and at least one of a first movement restriction member configured to restrict the first shaft member from moving in a direction of detaching from the first opening by being disposed at a rear end of the first shaft member inserted through the first opening and the opening of the first link, and a second movement restriction member configured to restrict the second shaft member from moving in a direction of detaching from the second opening by being disposed at a rear end of the second shaft member inserted through the second opening and the opening of the frame.

The first movement restriction member may be provided to restrict the first shaft member from moving in the direction of detaching from the first opening by being disposed opposite to an end surface of the first shaft member.

The second movement restriction member is provided to restrict the second shaft member from moving in the direction of detaching from the second opening by being disposed opposite to an end surface of the second shaft member.

Here, the "end surface" refers to a surface formed at an end (also referred to as a "rear end") corresponding to a rear end side, not an end (also referred to as a "tip end") corresponding to a tip end side when inserted through an opening such as the first opening, of two ends in a shaft direction of the shaft member such as the first shaft member, and formed in a direction (also referred to as a "detachment direction") in which the shaft member such as the first shaft member inserted through the opening is detached. For example, when the shaft member such as the first shaft member has a cylindrical portion (also referred to as a "large diameter portion") that is relatively long in the shaft direction, and a cylindrical portion (also referred to as a "small diameter portion") that is relatively short in the shaft direction (for example, 20% or less of the length in the shaft direction of the large diameter portion) and has a small diameter at a rear end side of the large diameter portion, the "end surface" includes a surface formed in a detachment direction of the small diameter portion, and a surface formed facing a detachment direction at a step between the small diameter portion and the large diameter portion. In this case, a restriction member such as the first movement restriction member may be disposed opposite to any one of the "end surfaces".

As another example, when the shaft member such as the first shaft member is formed in a cylindrical shape, but has a groove portion with a groove formed at the rear end, the "end surface" includes a rear end surface and a surface formed in the detachment direction at the groove portion. In this case, a restriction member such as the first movement restriction member may be disposed opposite to any one of the "end surfaces".

### BRIEF DESCRIPTION OF DRAWINGS

[FIG. 1A] FIG. 1A is a perspective view of a cutting device according to an embodiment.
[FIG. 1B] FIG. 1B is a front view of the cutting device according to the embodiment.
[FIG. 2] FIG. 2 is a side view of the cutting device according to the embodiment.
[FIG. 3A] FIG. 3A is a sectional view taken along A-A of FIG. 2.
[FIG. 3B] FIG. 3B is a sectional view taken along B-B of FIG. 2.
[FIG. 4] FIG. 4 is a perspective view showing a procedure for replacing a cutting blade of the cutting device according to the embodiment.
[FIG. 5] FIG. 5 is a perspective view showing a procedure for replacing the cutting blade of the cutting device according to the embodiment.
[FIG. 6] FIG. 6 is a perspective view showing a procedure for replacing the cutting blade of the cutting device according to the embodiment.
[FIG. 7] FIG. 7 is a perspective view showing a procedure for replacing the cutting blade of the cutting device according to the embodiment.
[FIG. 8] FIG. 8 is a perspective view showing a procedure for replacing the cutting blade of the cutting device according to the embodiment.
[FIG. 9] FIG. 9 is a perspective view showing a procedure for replacing the cutting blade of the cutting device according to the embodiment.
[FIG. 10A] FIG. 10A is a perspective view of a cutting device according to an embodiment.
[FIG. 10B] FIG. 10B is a cross-sectional view of the cutting device according to the embodiment.

### DESCRIPTION OF EMBODIMENTS

Hereinafter, embodiments of the present invention will be described with reference to the drawings. The following embodiments are examples for explaining the present invention, and it is not intended to limit the present invention only to the embodiments.

A cutting device disclosed in the present embodiment is configured to cut an object to be cut such as a reinforcing bar sandwiched between a pair of cutting blades by cutting edges, which are respectively formed on the pair of cutting blades arranged opposite to each other, moving relatively on approximately the same plane and coming into contact with (or coming close to) each other.

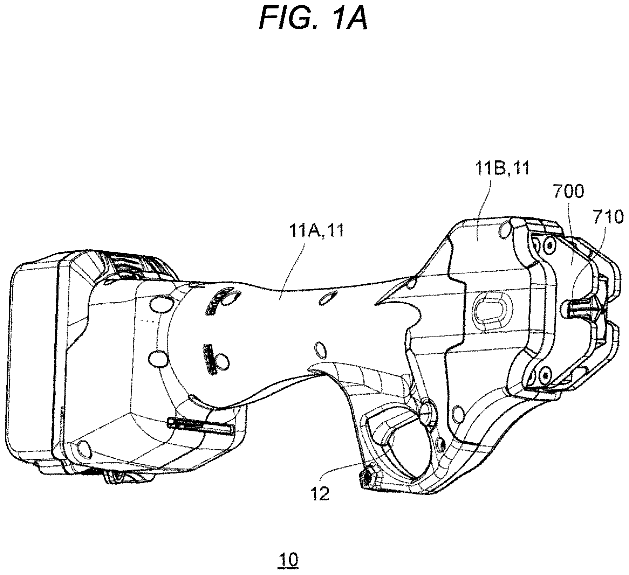

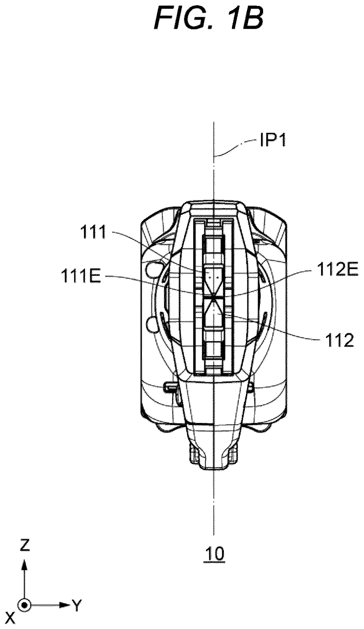

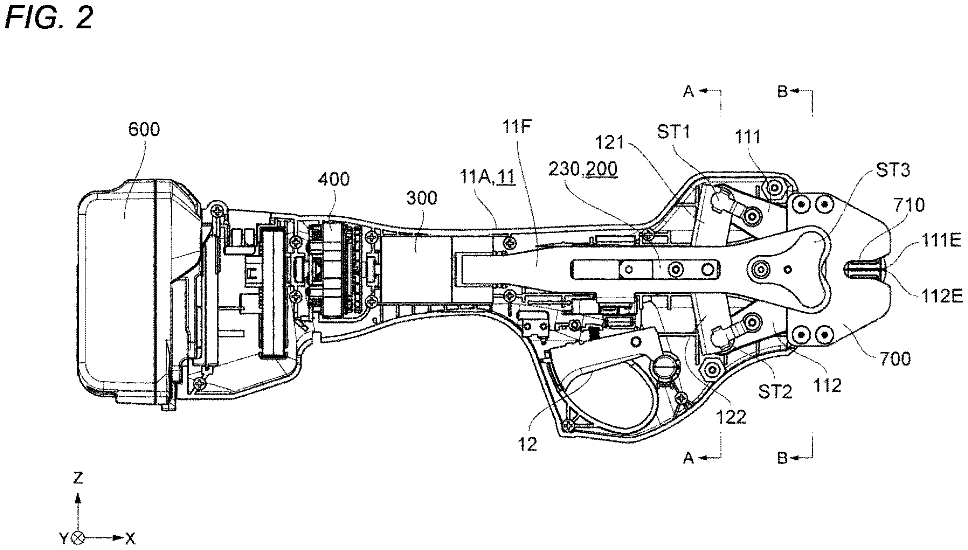

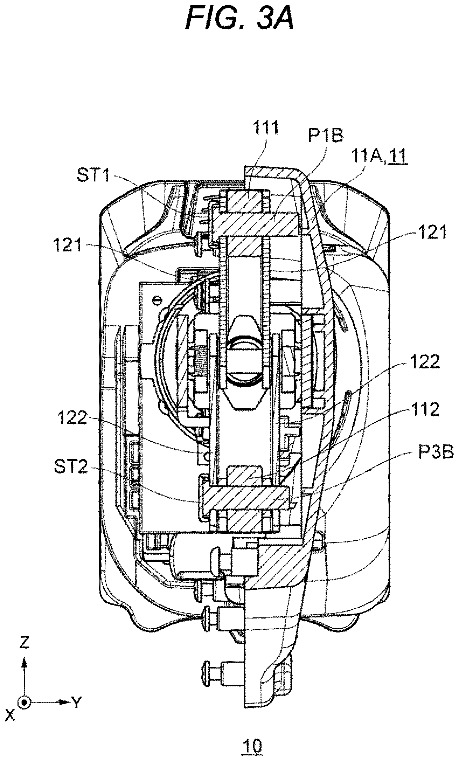

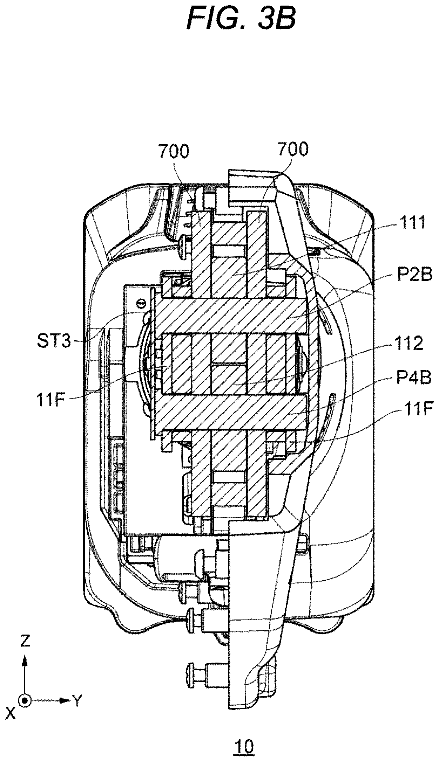

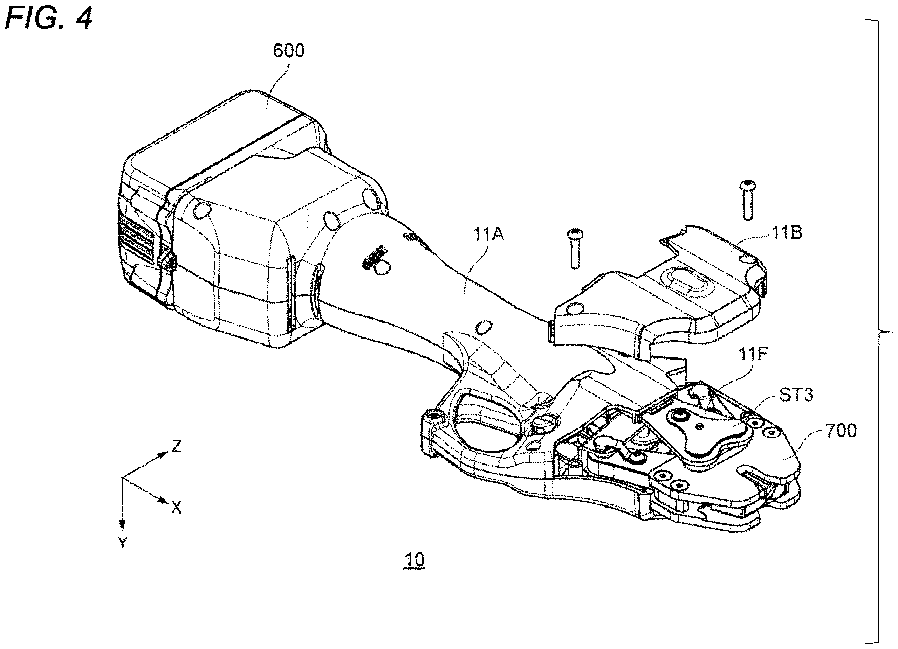

A configuration of a cutting device 10 according to the present embodiment will be described below. FIG. 1A is a perspective view of the cutting device 10 as seen from the front and side, and FIG. 1B is a front view of the cutting device 10 as seen from the front. FIG. 2 is a left side view of the cutting device 10 (however, as will be described later, part of a housing is omitted), and FIGS. 3A and 3B are cross-sectional views taken along A-A and B-B in FIG. 2. FIGS. 4 to 9 are perspective views showing a procedure for replacing the cutting blades.

As shown in these drawings, in the present embodiment, a direction in which a first cutting blade 111 and a second cutting blade 112 exist relative to an actuator (for example, an electric motor 400) of the cutting device 10 is referred to as the front or an X-axis positive direction, and an opposite direction is referred to as the rear or an X-axis negative direction, and may be collectively referred to as a front-rear direction or X-axis direction. A direction in which the first cutting blade 111 exists relative to the second cutting blade 112 is referred to as an upward or Z-axis positive direction, and a direction in which the second cutting blade 112 exists relative to the first cutting blade 111 is referred to as a downward or Z-axis negative direction, and may be collectively referred to as an up-down direction or Z-axis direction. A direction perpendicular to an X-axis and a Z-axis based on a right-handed orthogonal coordinate system may be referred to as a Y-axis positive direction (right) or a Y-axis negative direction (left), and may be collectively referred to as a left-right direction, width direction, or Y-axis direction. In the present embodiment, the first cutting blade 111 and the second cutting blade 112 are configured to rotate about the Y-axis direction as a rotation axis, and a first cutting edge 111E, which is a cutting edge of the first cutting blade 111, and a second cutting edge 112E, which is a cutting edge of the second cutting blade 112, are configured to move up and down on an X-Z virtual plane (FIG. 1B).

The cutting device 10 includes a housing 11, a trigger switch 12, a cutting mechanism, a moving mechanism 200, a speed reducer 300, the electric motor 400, a control board, and a storage battery 600.

The housing 11 is a container or a casing that defines an outer shape of the cutting device 10. The housing 11 is made of resin, for example. The speed reducer 300 described later, the electric motor 400 described later, and the like are housed inside the housing 11. FIG. 2 shows an internal configuration of the cutting device 10 since a part of the housing 11 facing a viewer side is not shown.

The housing 11 in the present embodiment includes a housing body 11A and a cover 11B that is detachably provided to the housing body 11A.

The housing body 11A constitutes a main part of the housing 11 and is a portion that houses the speed reducer 300, the electric motor 400, and the like. The cover 11B is a portion that is temporarily removed from the housing body 11A when the first cutting blade 111 and the second cutting blade 112 are replaced, and is a portion that constitutes one side surface (a left side surface in the present embodiment) of a front end of the housing 11. As will be described later, according to the cutting device 10 of the present embodiment, it is possible to easily replace the first cutting blade 111 and the second cutting blade 112 by removing the cover 11B.

A method for attaching and detaching the cover 11B to and from the housing body 11A can be implemented by known means. In the present embodiment, the cover 11B is configured to be attached to and detached from the housing body 11A by using screws as shown in FIG. 4. However, the present invention is not limited thereto. For example, the cover 11B and the housing body 11A may be connected by using a part such as a hinge, and the cover 11B may be configured to be opened and closed relative to the housing body 11A. The cover 11B may be removed from the housing body 11A by opening the cover 11B, and attached to the housing body 11A by closing the cover 11B.

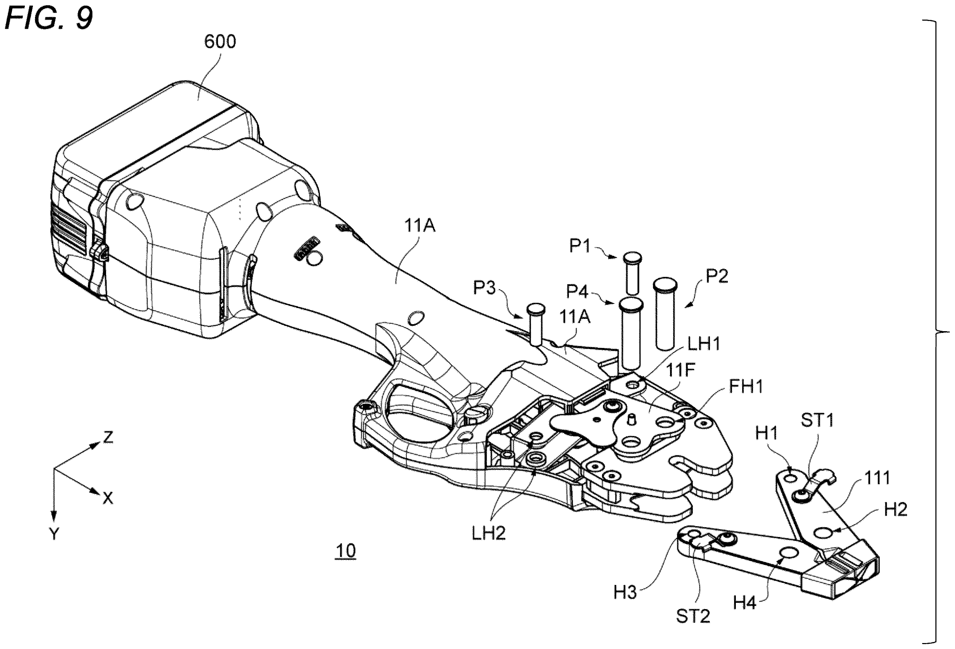

In the present embodiment, the housing body 11A and a portion fixed to the housing body 11A may be referred to as a frame. The cutting device 10 includes, as a part of the frame, a pair of frame portions 11F fixed to the housing body 11A itself or to a component fixed to the housing body 11A. The pair of frame portions 11F are fixed to the housing body 11A itself or to the component (for example, the speed reducer 300) fixed to the housing body 11A, and extend forward in the X-axis direction to positions where a second opening H2 of the first cutting blade 111 and a fourth opening H4 (FIG. 9) of the second cutting blade 112 are provided. In order to sandwich the first cutting blade 111 and the second cutting blade 112 in the Y-axis direction, one frame portion 11F is provided between the cover 11B and the pair of cutting blades, and the other frame portion 11F is provided between a side surface in the Y-axis positive direction of the housing body 11A and the pair of cutting blades.

A frame opening FH1 at a position corresponding to the second opening H2 and a frame opening FH2 at a position corresponding to the fourth opening H4 are formed in each of the pair of frame portions 11F. The second opening H2 and the frame opening FH1 are formed at an overlapping position in the Y-axis direction, and the fourth opening H4 and the frame opening FH2 are formed at an overlapping position in the Y-axis direction. Therefore, a second pin P2 can be inserted through the second opening H2 and the frame opening FH1 by being moved in the Y-axis positive direction, and a fourth pin P4 can be inserted through the fourth opening H4 and the frame opening FH2 by being moved in the Y-axis positive direction.

The frame portion 11F in the present embodiment further includes a third stopper ST3 (an example of a "second movement restriction member") that restricts the second pin P2 from moving in the Y-axis negative direction, which is a direction in which the second pin P2 is detached from the second opening H2 and the first frame opening FH1, by being disposed opposite to an end surface P2S in the Y-axis negative direction of the second pin P2, and restricts the fourth pin P4 from moving in the Y-axis negative direction, which is a direction in which the fourth pin P4 is detached from the fourth opening H4 and a second frame opening FH2, by being disposed opposite to an end surface P4S in the Y-axis negative direction of the fourth pin P4.

As shown in FIG. 2, the third stopper ST3 has three protrusions formed to protrude in three directions, and a base end corresponding to one of the protrusions is attached to the frame portion 11F by a male screw that screws into a female screw formed in the frame. The other two protrusions of the third stopper ST3 function as leaf springs that exert a biasing force in the Y-axis positive direction, which is opposite to the detachment direction of the second pin P2 and the fourth pin P4. The third stopper ST3 is provided to be rotatable with respect to the base end by loosening the male screw.

According to such a configuration, after the second pin P2 (fourth pin P4) is inserted through the second opening H2 (fourth opening H4) and the first frame opening FH1 (second frame opening FH2), the leaf springs of the two protrusions of the third stopper ST3 are disposed in positions facing the end surface P2S and the end surface P4S, respectively, and screwed in place, thereby restricting the second pin P2 and the fourth pin P4 from moving in the detachment direction (Y-axis negative direction), and thus it is possible to prevent that the second pin P2 or the fourth pin P4 comes off to release the connection between the first cutting blade 111 and the frame portions 11F or the connection between the second cutting blade 112 and the frame portions 11F.

The trigger switch 12 is a switch operated by a finger of a user. The user can turn on the trigger switch 12 by placing his or her finger on the trigger switch 12 and pulling the trigger switch 12 to the front side. When the user loosens his or her finger, the trigger switch 12 returns to an original position due to a force of a spring, and enters into an OFF state. When the trigger switch 12 is switched between an ON state and the OFF state, a corresponding signal is transmitted to the control board described later. The trigger switch 12 corresponds to an "operation portion" that can be switched between the ON state and the OFF state by an operation performed by the user. As will be described later, if the user performs an operation of switching the trigger switch 12 into the ON state, cutting of a reinforcing bar is started.

The cutting mechanism is a mechanism that cuts a reinforcing bar which is an object to be cut. The cutting mechanism has the pair of cutting blades, that is, the first cutting blade 111 and the second cutting blade 112, and a pair of link members, that is, a first link 121 and a second link 122.

As shown in FIG. 9, at least two openings, that is, a first opening H1 and the second opening H2 are formed in the first cutting blade 111. As will be described later, the first opening H1 is an opening for connecting the first cutting blade 111 to the first link 121, and the second opening H2 is an opening for connecting the first cutting blade 111 to the frame portion 11F.

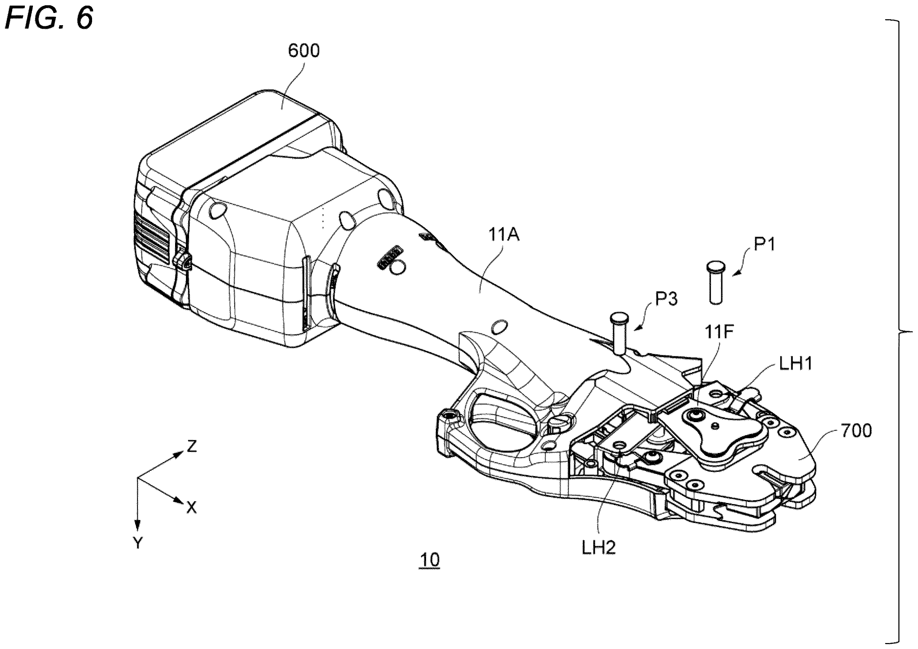

As will be described later, by inserting a first pin P1 through the first opening H1 and a first link opening LH1 (FIG. 6) formed in the first link 121, movement of the first link 121 can be transmitted to the first cutting blade 111, and thus the first cutting blade 111 can be pivotably connected to the first link 121.

As will be described later, by inserting the second pin P2 through the second opening H2 and the first frame opening FH1 (FIG. 9) formed in the frame portion 11F, the first cutting blade 111 can be pivotably connected to the frame portion 11F.

According to such a configuration, the first cutting blade 111 is rotatably provided based on a force acting from the first link 121, with the second pin P2 fixed to the frame portion 11F as a rotation shaft (fulcrum), and thus the first cutting edge 111E of the first cutting blade 111 can be moved close to the second cutting edge 112E of the second cutting blade 112 during cutting, and moved away from the second cutting edge 112E after cutting. Here, the second pin P2, which serves as the rotation shaft, is inserted parallel to the Y-axis direction, and thus the first cutting edge 111E moves on an X-Z virtual plane IP1 (FIG. 1B).

The first cutting blade 111 in the present embodiment further includes a first stopper ST1 (FIG. 9, an example of a "first movement restriction member") that restricts the first pin P1 from moving in the Y-axis negative direction, which is the direction in which the first pin P1 is detached from the first opening H1 and the first link opening LH1, by being disposed opposite to an end surface P1S in the Y-axis negative direction of the first pin P1.

Abase end of the first stopper ST1 is attached to the first cutting blade 111 by a male screw that screws to a female screw formed in the first cutting blade 111. A tip end of the first stopper ST1 is a leaf spring that exerts a biasing force in the Y-axis positive direction opposite to the detachment direction of the first pin P1. The tip end of the first stopper ST1 is provided to be rotatable with respect to the base end by loosening the male screw.

According to such a configuration, after the first pin P1 is inserted through the first opening H1 and the first link opening LH1, the leaf spring at the tip end of the first stopper ST1 is disposed at a position facing the end surface P1S, thereby restricting the first pin P1 from moving in the detachment direction (Y-axis negative direction), and thus it is possible to prevent that the first pin P1 comes off to release the connection between the first cutting blade 111 and the first link 121.

The first stopper ST1 is provided (attached) to the first cutting blade 111. Since a relative positional relationship between the first cutting blade 111 and the first opening H1 does not change, this configuration makes it possible to dispose the first stopper ST1 opposite to the end surface P1S in the Y-axis negative direction of the first pin P1 even when the first pin P1 moves in response to the movement of the first link 121. However, for the same reason, the first stopper ST1 may be provided (attached) to the first link 121, or may be provided in a different configuration. For example, the first pin P1 may be restricted from moving in the detachment direction (Y-axis negative direction) by providing an inner wall surface of the cover 11B to closely face the end surface P1S.

The second cutting blade 112 has the same configuration as the first cutting blade 111 and is arranged in up and down symmetry with the first cutting blade 111 (FIG. 2), and thus detailed descriptions will be omitted. The second cutting blade 112 has a third opening H3 (FIG. 9) formed corresponding to the first opening H1 and used to connect the second cutting blade 112 to the second link 122, and a fourth opening H4 formed corresponding to the second opening H2 and used to connect the first cutting blade 111 to the frame portion 11F. By inserting a third pin P3 (FIG. 9) through the third opening H3 and second link openings LH2 formed in the second link 122, the second cutting blade 112 can be pivotably connected to the second link 122. By inserting the fourth pin P4 (FIG. 9) through the fourth opening H4 and the second frame opening FH2 formed in the frame portion 11F, the second cutting blade 112 can be pivotably connected to the frame portion 11F.

According to such a configuration, the second cutting blade 112 is configured to rotate about the fourth pin P4 fixed to the frame portion 11F as a rotation shaft (fulcrum). Here, the fourth pin P4, which serves as the rotation shaft, is inserted parallel to the Y-axis direction, and thus the second cutting edge 112E moves on the X-Z virtual plane IP1 (FIG. 1B). Therefore, the first cutting edge 111E and the second cutting edge 112E move close to each other when cutting, and move on the X-Z virtual plane IP1 (FIG. 1B) away from each other after cutting.

Furthermore, the second cutting blade 112 includes a second stopper ST2 (an example of the "first movement restriction member") that restricts the third pin P3 from moving in the Y-axis negative direction, which is the direction in which the third pin P3 is detached from the third opening H3 and the second link openings LH2, by being disposed opposite to an end surface P3S in the Y-axis negative direction of the third pin P3. Therefore, after the third pin P3 is inserted through the third opening H3 and the second link openings LH2, the leaf spring at a tip end of the second stopper ST2 is disposed at a position opposite to the end surface P2S, so that the second pin P2 can be restricted from moving in the detachment direction.

As described above, in the cutting device 10 of the present embodiment, the first cutting blade 111 and the second cutting blade 112 are arranged opposite to each other such that the first cutting edge 111E and the second cutting edge 112E, which are ridges of cutting edges of the first cutting blade 111 and the second cutting blade 112, move on trajectories passing through approximately the same plane, that is, the X-Z virtual plane IP1. Accordingly, it is possible to switch between an opened state where the first cutting blade 111 and the second cutting blade 112 are spaced apart from each other and a closed state where the first cutting blade 111 and the second cutting blade 112 come into contact with (or close to) each other. In the example of FIGS. 1A, 1B and 2, the pair of first cutting blade 111 and second cutting blade 112 are in the closed state.

The first link 121 (second link 122) which is a link member is a rod-shaped member, one end thereof is pivotably connected to the first cutting blade 111 (second cutting blade 112) via the first pin P1 (third pin P3), and the other end thereof is pivotably connected to a moving member 230 described later. As will be described later, the moving member 230 is configured to move in the front-rear direction (X-axis direction) by a driving force of the electric motor 400. As shown in FIG. 3A, FIG. 4, and the like, the first link 121 (second link 122) in the present embodiment is implemented by a sheet metal component having a ⊐-shaped cross-sectional shape composed of two plate-shaped members parallel to the X-Z plane and one plate-shaped member connecting the two plate-shaped members and parallel to the Y-axis direction.

In FIG. 2, when the moving member 230 moves in the X-axis negative direction (left direction in FIG. 2), the first cutting blade 111 on the upper side in FIG. 2 rotates counterclockwise, and the second cutting blade 112 on the lower side in FIG. 2 rotates clockwise. Accordingly, the pair of first cutting blades 111 and second cutting blades 112 change from the closed state to the opened state. On the other hand, when the moving member 230 moves in the X-axis positive direction (right direction in FIG. 2) while the pair of first cutting blade 111 and second cutting blade 112 are in the opened state, the first cutting blade 111 on the upper side in FIG. 2 rotates clockwise, and the second cutting blade 112 on the lower side in FIG. 2 rotates counterclockwise. Accordingly, the pair of first cutting blade 111 and second cutting blade 112 return to the closed state. In this way, the pair of cutting blades, the pair of links, and the moving member 230 as a whole constitute a so-called "toggle link mechanism".

The cutting device 10 of the present embodiment is provided with a pair of guide plates 700 near the cutting blades. The guide plates 700 have a function of covering and protecting the pair of cutting blades in a standby state, a function of guiding the reinforcing bar, which is the object to be cut, to a position between the pair of cutting blades along recesses 710, and a function of stabilizing a posture of the cutting device 10 before and after cutting by clamping the reinforcing bar in the recesses 710.

The guide plates 700 are plate-shaped members made of metal, and are arranged to sandwich the pair of cutting blades from both sides in the Y-axis direction. Shapes of the pair of guide plates 700 are the same. As shown in FIG. 2, each of the guide plates 700 has the recess 710 formed to recess from a front end toward the rear side. In the standby state where the pair of cutting blades are fully opened, the respective cutting blades are retracted to the outside of the recesses 710.

The moving mechanism 200 is a device for converting a rotation movement of the electric motor 400 into a linear movement of the moving member 230, thereby causing the cutting mechanism to operate. The moving mechanism 200 can be implemented, for example, by a known ball screw mechanism, and has a screw shaft, a nut, and the moving member 230 connected to the nut.

The screw shaft is a rod-shaped member that extends linearly in the X-axis direction from the rear end side to the front end side. A male screw is formed on an outer circumferential surface of the screw shaft, and when the electric motor 400 is driven, the screw shaft rotates about a central axis thereof. On the other hand, the nut is a substantially cylindrical member disposed to surround the screw shaft from the outer circumferential side, and a female screw is formed on an inner circumferential surface of the nut to screw to the male screw formed on the outer circumferential surface of the screw shaft. While the nut is allowed to move along the X-axis direction, rotation about the central axis of the screw shaft is restricted, and thus when the screw shaft rotates about the central axis thereof, the nut and the moving member 230 connected to the nut are configured to advance and retreat along the X-axis direction.

The speed reducer 300 transmits rotation of an output shaft of the electric motor 400 to the screw shaft of the ball screw mechanism after reducing the speed.

The electric motor 400 is a rotating electrical machine for generating a driving force necessary for operations of the pair of cutting blades, and is, for example, a brushless DC motor. The output shaft of the electric motor 400 is connected to the speed reducer 300.

When a current is supplied to a coil of the electric motor 400 and the output shaft rotates, the screw shaft rotates via the speed reducer 300, and thus the nut and the moving member 230 move forward or backward depending on the rotation direction. The first link 121 and the second link 122 rotate according to the forward or backward movement of the moving member 230, and thus it is possible to open and close the pair of cutting blades (first cutting blade 111, second cutting blade 112) of the cutting device 10 as described above.

The electric motor 400 is provided with a sensor (not shown) (for example, a hall sensor for acquiring rotation position information and rotation speed information of a rotor of the electric motor 400 or a position sensor for acquiring position information of the nut in the X-axis direction) and the control board (not shown). An inverter circuit including a control IC and a switching element mounted on the control board is configured to control the electric motor 400 based on detection information from the sensor (for example, position information of the rotor of the electric motor 400).

The storage battery 600 stores electric power necessary for an operation of the electric motor 400 and the control board, and is, for example, a lithium ion battery. In the cutting device 10, a portion in which the storage battery 600 is built can be detached from the housing 11 as a battery pack, and is connected to and charged by an external charger. Instead of such an aspect, a configuration in which the storage battery 600 can be charged while the storage battery 600 is attached to the housing 11 may be adopted.

Each of the four pins, that is, the first pin P1 (an example of a "first shaft member"), the second pin P2 (an example of a "second shaft member"), the third pin P3 (an example of a "third shaft member"), and the fourth pin P4 (an example of a "fourth shaft member"), is formed in a cylindrical shape with a central axis as shown in FIG. 9 and the like, and has a body portion with a cylindrical side surface and a flange portion formed by expanding radially from the body portion (the body portion of the first pin P1 is referred to as a body portion P1B, and the flange portion thereof is referred to as a flange portion P1F, and the other pins may be similarly denoted). The body portion of each of the pins has an outer diameter smaller than an opening diameter (diameter) of the opening through which the pin is inserted, and the flange portion of the pin has an outer diameter larger than the opening diameter (diameter) of the opening through which the pin is inserted.

Therefore, by moving each of the pins in the Y-axis positive direction, it is possible to connect components that have two openings through which the pin passes, and by moving the pin in the Y-axis negative direction, it is possible to separate the components that have two openings through which the pin passes.

As shown in FIG. 3A, the body portion P1B formed in the cylindrical shape of the first pin P1 connects the first link 121 and the first cutting blade 111 by being inserted through the two openings in a manner of penetrating the first link openings LH1 formed to penetrate the first link 121 and the first opening H1 formed to penetrate the first cutting blade 111. The first stopper ST1 is disposed to the left of the end surface P1S of the first pin P1, and thus the first pin P1 is prevented from falling off. Similarly, the body portion P3B formed in the cylindrical shape of the third pin P3 connects the second link 122 and the second cutting blade 112 by being inserted through the two openings in a manner of penetrating the second link openings LH2 formed to penetrate the second link 122 and the third opening H3 formed to penetrate the second cutting blade 112. The second stopper ST2 is disposed to the left of the end surface P3S of the third pin P3, and thus the third pin P3 is prevented from falling off.

As shown in FIG. 3B, the body portion P2B formed in the cylindrical shape of the second pin P2 connects the frame portions 11F and the first cutting blade 111 by being inserted through two openings in a manner of penetrating the first frame openings FH1 formed to penetrate the pair of frame portions 11F and the second opening H2 formed to penetrate the first cutting blade 111. The third stopper ST3 is disposed to the left of the end surface P2S of the second pin P2, and thus the second pin P2 is prevented from falling off. Similarly, the body portion P4B formed in the cylindrical shape of the fourth pin P4 connects the frame portions 11F and the second cutting blade 112 by being inserted through the two openings in a manner of penetrating the second frame openings FH2 formed to penetrate the frame portions 11F and the fourth opening H4 formed to penetrate the second cutting blade 112. The third stopper ST3 is disposed to the left of the end surface P4S of the fourth pin P4, and thus the fourth pin P4 is prevented from falling off.

In the cutting device 10 having the above configuration, by opening and closing the pair of first cutting blade 111 and second cutting blade 112 as described above, it is possible to cut the object to be cut, such as reinforcing bars and electric wires.

Here, as shown in FIG. 1B, the first cutting edge 111E and the second cutting edge 112E of the first cutting blade 111 and the second cutting blade 112 arranged opposite to each other in the Z-axis direction can be moved on the X-Z virtual plane IP1 to come into contact with or come close enough to each other to cut the object to be cut.

According to such a configuration, it is possible to reduce a load acting on the cutting blades in a rotation shaft direction (Y-axis direction) and to reduce a need to improve an alignment accuracy of the two cutting blades in the rotation shaft direction, as compared with a cutting device that cuts the object to be cut by moving two cutting blades to intersect at a small interval. Therefore, it is possible to preferably adopt a configuration in which parts are connected to each other by pins, as shown in the present embodiment.

### [Method for Replacing Cutting Blade]

A method for replacing the cutting blades of the cutting device 10 will be described below with reference to FIGS. 4 to 9. As the cutting device 10 is used, the cutting blades may gradually wear out or become chipped and damaged, and thus it is necessary to replace the old cutting blades with new cutting blades.

As shown in FIG. 4, first, the male screw that attaches the cover 11B to the housing body 11A is removed to remove the cover 11B from the housing body 11A. Then, as shown in FIG. 4, the frame portion 11F and the third stopper ST3 hidden under the cover 11B are exposed.

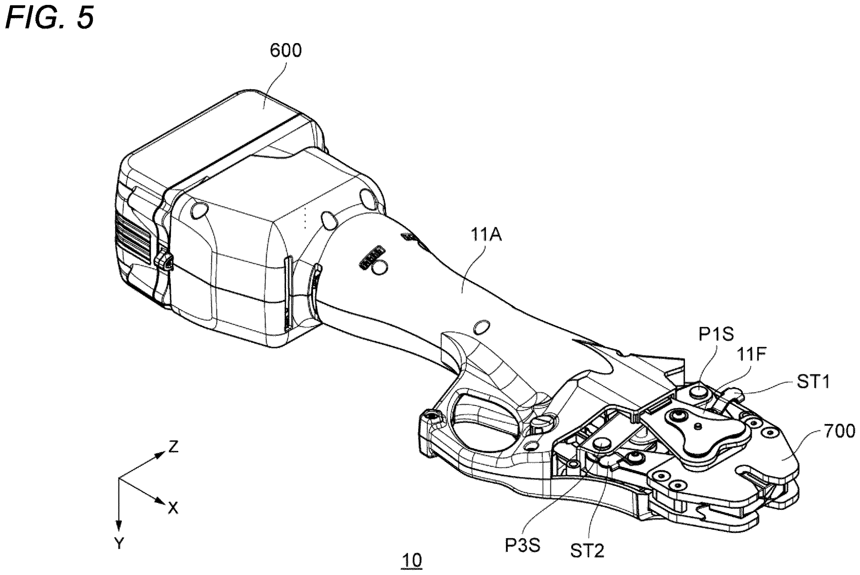

Next, the male screw that attaches the first stopper ST1 to the first link 121 is loosened, and the leaf spring of the first stopper ST1 is moved from the position facing the end surface P1S formed on the flange portion of the first pin P1 to a different position. Similarly, the male screw that attaches the second stopper ST2 to the second link 122 is loosened, and the leaf spring of the second stopper ST2 is moved from the position facing the end surface P2S formed on the flange portion of the second pin P2 to a different position. Then, as shown in FIG. 5, the end surface P1S of the first pin P1 and the end surface P3S of the third pin P3 are exposed.

Next, as shown in FIG. 6, by moving the first pin P1 and the third pin P3 in the Y-axis negative direction, the first pin P1 is removed (detached) from the first link 121 and the first cutting blade 111, and the third pin P3 is removed (detached) from the second link 122 and the second cutting blade 112. Accordingly, the connection between the first link 121 and the first cutting blade 111 is released, and the connection between the second link 122 and the second cutting blade 112 is released.

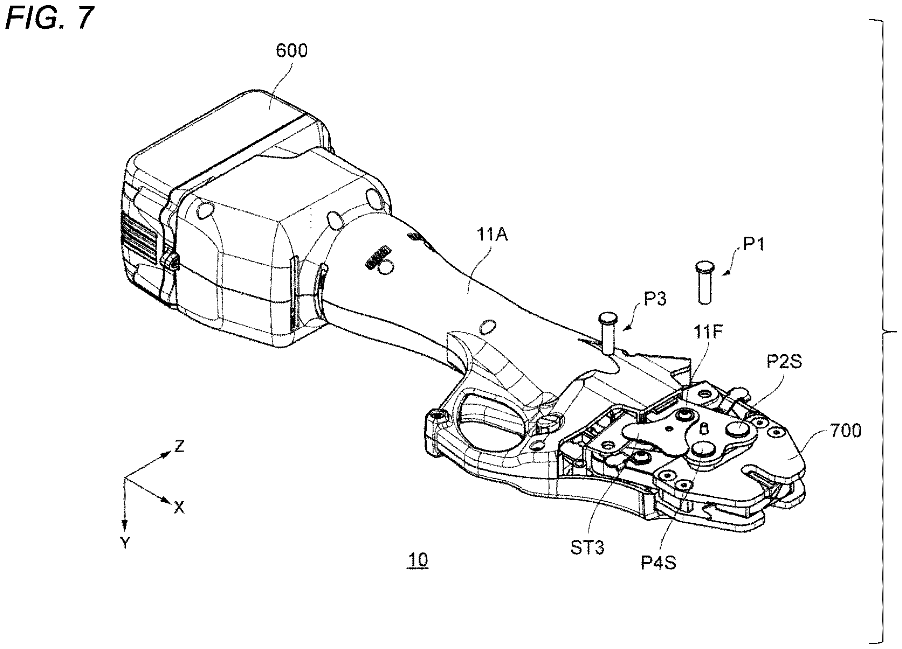

Next, the male screw that attaches the third stopper ST3 to the frame portion 11F is loosened, and the two protrusions of the third stopper ST3 are moved from the positions respectively facing the end surface P2S formed on the flange portion of the second pin P2 and the end surface P4S formed on the flange portion of the fourth pin P4 to different positions. Then, as shown in FIG. 7, the end surface P2S of the second pin P2 and the end surface P4S of the fourth pin P4 are exposed.

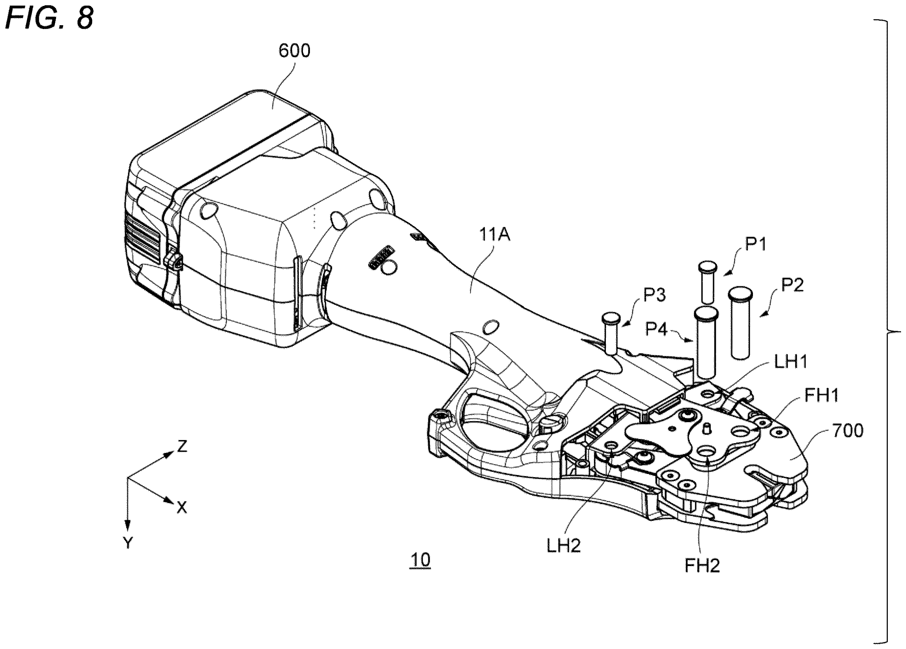

Next, as shown in FIG. 8, by moving the second pin P2 and the fourth pin P4 in the Y-axis negative direction, the second pin P2 is removed (detached) from the first cutting blade 111 and the frame portion 11F, and the fourth pin P4 is removed (detached) from the second cutting blade 112 and the frame portion 11F. The connection between the frame portions 11F and the first cutting blade 111 is released, and the connection between the frame portions 11F and the second cutting blade 112 is released.

Accordingly, the first cutting blade 111 is separated from the frame portions 11F and the first link 121. Similarly, the second cutting blade 112 is separated from the frame portions 11F and the second link 122. Therefore, as shown in FIG. 9, the first cutting blade 111 and the second cutting blade 112 can be removed from the front.

Thereafter, a new first cutting blade 111 and a new second cutting blade 112 can be attached to the cutting device 10 by performing a procedure in reverse to the procedure described above.

As described above, according to the cutting device 10, the cutting blades can be easily replaced as compared with a case where the cutting blades are attached with a bolt and a nut. In particular, in order to fix the bolt with the nut after inserting the bolt, it is necessary to perform work from a side opposite to the insertion side. However, according to the cutting device 10, the cutting blades can be easily replaced by removing the cover 11B constituting one side of the housing 11 (a side on which the first pin P1 or the like is pulled out, and may also be referred to as the "insertion side"), and working from the removed side.

The cutting device 10 disclosed in the present embodiment can be modified as appropriate. For example, the cutting device 10 includes a ball screw mechanism using the electric motor 400 as the actuator of the moving member 230 for rotating the first link 121 and the second link 122 by being connected to both links. However, the configuration for driving the moving member 230 in the front-rear direction is not limited thereto, and for example, a configuration in which a piston serving as the moving member 230 is driven in the front-rear direction by using compressed air or hydraulic pressure as an actuator may be adopted.

In the links such as the first link 121 and the frame portions 11F in the present embodiment, an opening is formed in each of two spaced apart plate materials in order to stabilize a posture of the pin such as the first pin P1. However, the opening for allowing the pin to be inserted may be a single opening.

In the cutting device 10 of the present embodiment, a configuration in which the pair of links and the pair of cutting blades which are driven symmetrically are connected by inserting a pin through each of these links and cutting blades is adopted, and a configuration in which a pin is inserted through only one of the links and one of the cutting blades may be adopted. For example, in the cutting device in which one cutting blade is fixed and the other cutting blade moves close to the one cutting blade to cut the object to be cut, a connection configuration similar to that of the present embodiment may be adopted only for the configuration including the other moving cutting blade.

The cutting blade may also include a plurality of parts. For example, the cutting blade may include an adjustment part (for example, an adjustment screw) for finely adjusting the position of the cutting edge.

A connection configuration similar to that of the present embodiment may also be adopted for the connection between the moving member 230 and the first link 121 and/or the second link 122.

Furthermore, various modifications can be made without departing from the gist of the present invention. For example, it is possible to add a part of constituent elements of an embodiment to another embodiment within the scope of the ordinary creativity of a person skilled in the art. In addition, it is possible to replace a part of constituent elements of an embodiment with corresponding constituent elements of another configuration.

### [Second Embodiment]

Hereinafter, a different embodiment of the cutting device will be described. However, the same reference numerals are denoted for the same configurations as in another embodiment, and detailed descriptions are omitted, and different parts will be mainly described.

A cutting device of the present embodiment has the first movement restriction member and the second movement restriction member on the inner wall surface of the cover 11B instead of the first stopper ST1 to the third stopper ST3.

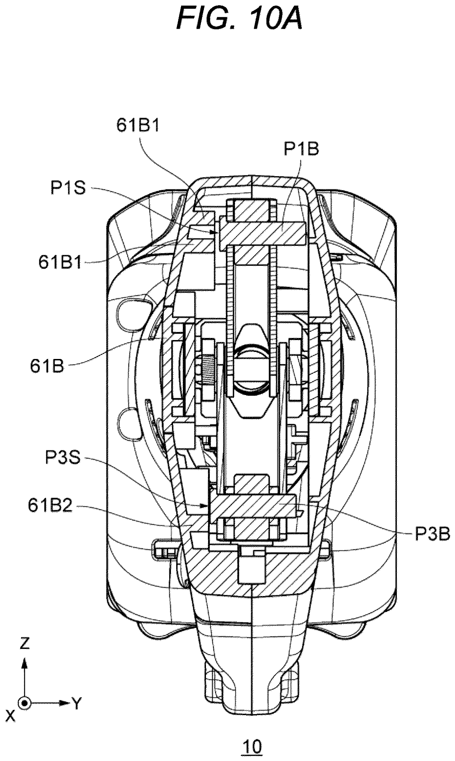

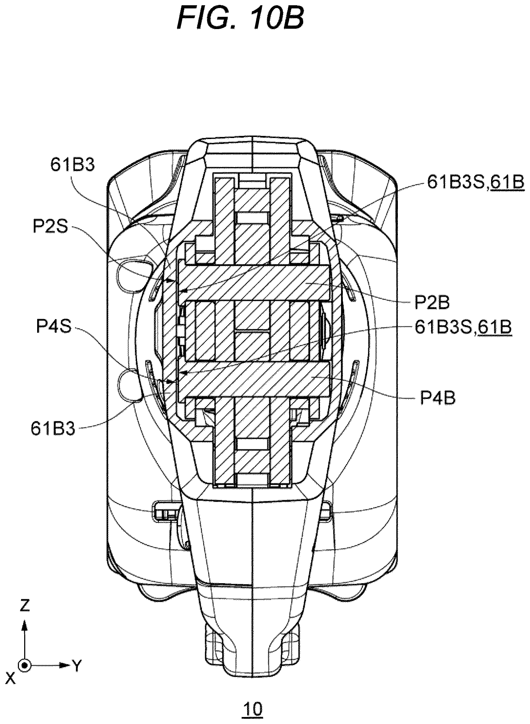

FIGS. 10A and 10B are cross-sectional views of the cutting device of the present embodiment, which correspond to an A-A section and a B-B section of FIG. 2.

As shown in FIG. 10A, a cover 61B according to the present embodiment has a first protrusion 61B1 (an example of the "first movement restriction member") disposed at a position facing the end surface P1S of the first pin P1 by being formed to protrude inward from the inner wall surface, and a second protrusion 61B2 (an example of the "first movement restriction member") disposed at a position facing the end surface P3S of the third pin P3 also by being formed to protrude inward from the inner wall surface.

According to such a configuration, the first pin P1 and the third pin P3 can also be prevented from falling off.

Furthermore, the cover 61B according to the present embodiment as shown in FIG. 10B is provided with a portion 61B3 (an example of the "first movement restriction member") having an inner wall surface 61B3S provided in a position closely facing the end surface P2S of the second pin P2 and/or the end surface P4S of the fourth pin P4, so that the second pin P2 and/or the fourth pin P4 can be prevented from falling off.

In addition, the first pin P1 to the fourth pin P4 can be removed by removing the cover 61B, and thus replacement work is further simplified.

As a further modification, the cover 61B and at least one of the first pin P1 to the fourth pin P4 (for example, the first pin P1 and the third pin P3) may be integrated. According to such a configuration, it is possible to simplify the work of removing the first pin P1 to the fourth pin P4.

The first pin P1 to the fourth pin P4 may not have the flange portion. Even if the flange portion is not provided, it is possible to restrict the movement in the Y-axis positive direction by forming an inner wall surface of the housing body 11A at a position facing tip end surfaces of the first pin P1 to the fourth pin P4. Furthermore, it goes without saying that a groove may be formed around the pin instead of the flange, and a (known) E-ring or C-ring may be attached to the groove to exert the same effect of restricting the movement as a flange.

Each of the body portions of the first pin P1 to the fourth pin P4 may have an uneven side surface, like a bolt with a male screw, instead of the cylindrical surface.

The cutting device 10 may have only one of the first pin P1 to the fourth pin P4 (for example, the first pin P1), and the portion connected by another pin (for example, the second pin P2 to the fourth pin P4) may have the same configuration as that in the related art.

For example, the cutting device 10 may include the first pin P1, the third pin P3, and the corresponding first stopper ST1 and second stopper ST2, but not the second pin P2, the fourth pin P4, or the third stopper ST3.

The second pin P2 and the fourth pin P4 of the cutting device 10 may be common. In this case, the second pin P2 is inserted into the fourth opening H4 in addition to the second opening H2 and the openings of the frame portions 11F at the center position in the Z-axis direction. The openings of the frame portions 11F are formed at the center position in the Z-axis direction. The second opening H2 and the fourth opening H4 are arranged to overlap at the center position in the Z-axis direction.

According to such a configuration, the second pin P2 can pivotably connect the second cutting blade 112 to the frame portion 11F.

In the above embodiment, the first stopper ST1, the second stopper ST2, the third stopper ST3, and the like which are the first movement restriction member and the second movement restriction member are provided at positions facing the end surfaces of the rear ends of the first pin P1 and the like, so that the first pin P1 and the like are restricted from moving in the detachment direction. However, another part for restricting the first pin P1 and the like from moving in the detachment direction by being disposed to be engageable with the rear ends of the first pin P1 and the like (including a mode in which the part is normally spaced apart from the shaft member such as the first pin P1, and comes into contact with the shaft member when the shaft member moves in the detachment direction) may also be adopted as a movement restriction part.

## Claims

1. A cutting device, comprising:
a first cutting blade in which a first opening and a second opening are formed;
a first link in which an opening is formed;
a frame in which an opening is formed;
at least one of a first shaft member pivotably connecting the first cutting blade to the first link by being inserted through the first opening and the opening of the first link, and a second shaft member pivotably connecting the first cutting blade to the frame by being inserted through the second opening and the opening of the frame; and
at least one of a first movement restriction member configured to restrict the first shaft member from moving in a direction of detaching from the first opening by being disposed at a rear end of the first shaft member inserted through the first opening and the opening of the first link, and a second movement restriction member configured to restrict the second shaft member from moving in a direction of detaching from the second opening by being disposed at a rear end of the second shaft member inserted through the second opening and the opening of the frame.

2. The cutting device according to claim 1, wherein
the first movement restriction member is provided to restrict the first shaft member from moving in the direction of detaching from the first opening by being disposed opposite to an end surface of the first shaft member, and
the second movement restriction member is provided to restrict the second shaft member from moving in the direction of detaching from the second opening by being disposed opposite to an end surface of the second shaft member.

3. The cutting device according to claim 1, wherein
the first shaft member includes:
a first body portion having a cylindrical surface and formed to be able to pass through the first opening and the opening of the first link; and
a first flange portion formed by expanding radially from the first body portion, and
the second shaft member includes:
a second body portion having a cylindrical surface and formed to be able to pass through the second opening and the opening of the frame; and
a second flange portion formed by expanding radially from the second body portion.

4. The cutting device according to any one of claims 1 to 3, wherein
the first movement restriction member is provided on at least one of the first cutting blade and the first link, and
the second movement restriction member is provided on the frame.

5. The cutting device according to claim 1, further comprising:
a cover on which the first movement restriction member and the second movement restriction member are provided.

6. The cutting device according to claim 5, wherein
the cover further includes the first shaft member and the second shaft member.

7. The cutting device according to claim 1, further comprising:
a plurality of openings formed in the frame;
a second cutting blade in which a third opening and a fourth opening are formed;
a second link in which an opening is formed;
a third shaft member pivotably connecting the second cutting blade to the second link by being inserted through the third opening and the opening of the second link; and
a fourth shaft member pivotably connecting the second cutting blade to the frame by being inserted through the fourth opening and another opening of the frame.

8. The cutting device according to claim 7, wherein
the third shaft member includes:
a third body portion having a cylindrical surface and formed to be able to pass through the third opening and the opening of the second link; and
a third flange portion formed by expanding radially from the third body portion, and
the fourth shaft member includes:
a fourth body portion having a cylindrical surface and formed to be able to pass through the fourth opening and the other opening of the frame; and
a fourth flange portion formed by expanding radially from the fourth body portion.

9. The cutting device according to claim 7, further comprising:
a moving member connected to each of the first link and the second link and configured to move in a predetermined direction; and
an actuator configured to move the moving member in the predetermined direction, wherein
as the first link and the second link respectively rotate by the moving member moving in the predetermined direction, the first cutting blade connected to the first link via the first shaft member rotates about the second shaft member as a fulcrum, and the second cutting blade connected to the second link via the third shaft member rotates about the fourth shaft member as a fulcrum, so that a cutting edge of the first cutting blade and a cutting edge of the second cutting blade move in a direction close to each other.

10. The cutting device according to claim 1, further comprising:
a second cutting blade in which a third opening and a fourth opening are formed;
a second link in which an opening is formed; and
a third shaft member pivotably connecting the second cutting blade to the second link by being inserted through the third opening and the opening of the second link, wherein
the second shaft member further pivotably connects the second cutting blade to the frame by being inserted through the fourth opening.

11. The cutting device according to claim 7, wherein
the first cutting blade and the second cutting blade are arranged opposite to each other, and
a cutting edge of the first cutting blade and a cutting edge of the second cutting blade are configured to move relatively on approximately the same plane.

12. The cutting device according to claim 1, wherein
the cutting device includes at least one of a combination of the first shaft member and the first movement restriction member, and a combination of the second shaft member and the second movement restriction member.
